# EUROPÄISCHE PATENTSCHRIFT

(11) **EP 1 190 135 B1**
(45) Veröffentlichungstag und Bekanntmachung des Hinweises auf die Patenterteilung: **17.03.2004**
(21) Anmeldenummer: 00945696.3
(22) Anmeldetag: 31.05.2000
(51) Int. Cl.: D06F 23/06

(54) **VON VORN BESCHICKBARE WASCHMASCHINE MIT EINER DREHBAREN WÄSCHETROMMEL**
FRONT-LOADING WASHING MACHINE COMPRISING A ROTATABLE LAUNDRY BASKET
MACHINE A LAVER A CHARGEMENT FRONTAL, MUNIE D'UN TAMBOUR ROTATIF

(30) Priorität: 07.06.1999 DE 19925917
(43) Veröffentlichungstag der Anmeldung: 27.03.2002
(73) Patentinhaber: BSH Bosch und Siemens Hausgeräte GmbH, 81739 München (DE)
(72) Erfinder: USZKUREIT, Detlef, D-14167 Berlin (DE); HEYDER, Reinhard, D-13403 Berlin (DE); WIESNER, Thomas, D-13189 Berlin (DE); SCHERMUCK, Horst, D-12623 Berlin (DE)
(86) Internationale Anmeldenummer: PCT/EP2000/004999
(87) Internationale Veröffentlichungsnummer: WO 2000/075411

(56) Entgegenhaltungen:
- WO-A-99/54540
- DE-A- 4 104 450
- DE-C- 537 758

## Beschreibung

Die Erfindung betrifft eine von vorn beschickbare Waschmaschine mit einer drehbaren Wäschetrommel, deren tiefste Mantellinie in Betriebsposition der Waschmaschine von einer Horizontalen nach vom ansteigend abweicht, mit hohlen, langgestreckten Mitnehmern, die an der Innenseite des Mantels angeordnet sind und im rückwärtigen Bereich der Wäschetrommel Flüssigkeitseinlässe aufweisen, die beim Drehen der Wäschetrommel in der tiefsten Position mit Flüssigkeitsmengen beaufschlagt werden und diese Flüssigkeitsmengen in die Mitnehmer leiten, die ihrerseits in ihnen enthaltene Flüssigkeitsmengen anheben und durch Öffnungen aus einer angehobenen Position in das Wäschetrommelinnere abgeben.

Bei Waschmaschinen ist es seit langer Zeit Stand der Technik, die zu waschende Wäsche mit Waschlauge zu benetzen und zum Herauslösen der Verunreinigungen mechanisch zu bewegen. Diese Funktion wird bei Trommelwaschmaschinen von einer in einem Laugenbehälter im wesentlichen waagerecht angeordneten Wäschetrommel zur Aufnahme der Wäsche übernommen, die in Drehung versetzt wird und dabei die Wäsche in ihrem Inneren bewegt. Um diese Funktion zu unterstützen, ist es seit langem bekannt, innen am Wäschetrommelmantel langgestreckte, rippenförmige Mitnehmer anzuordnen, die quer zur Bewegungsrichtung des Wäschetrommelmantels ausgerichtet sind. Derartige innen an einer Wäschetrommel befestigte Mitnehmerrippen sind bereits aus DE-PS 8 347 aus dem Jahr 1879 bekannt und werden seit langer Zeit nahezu ausnahmslos für die Wäschebewegung in Trommelwaschmaschinen eingesetzt.

Daneben sind auch einige Trommelwaschmaschinen bekannt, bei denen die Mitnehmer schräg gestellt sind und innen am Wäschetrommeimantel im wesentlichen entlang einer Schraubenlinie verlaufen. Die Schrägstellung der Mitnehmer erfolgt dabei in allen Fällen mit dem Ziel, die Bewegung der Wäsche beziehungsweise den Eintrag an mechanischer Energie in die Wäsche zu beeinflussen. Derartige Trommelwaschmaschinen sind beispielsweise aus DE-PS 537 758, DE-PS 576 523, FR 1 136 981 und DE 44 12 718 A1 bekannt. Ferner sind Trommelwaschmaschinen bekannt, bei denen mit der Schrägstellung der Mitnehmer ein Transport der Wäsche innerhalb der Trommel bei deren Drehung erreicht wird. In der aus der DE-GM 88 04 246 gekannten Trommelwaschmaschine wird auf diese Weise die Entnahme der Wäsche unterstützt.

Weiterhin sind ein Verfahren zum Waschen von Textilien und ein Waschvollautomat gemäß dem Oberbegriff des Anspruches 1 bekannt (DE 41 04 450 A1). Obwohl dort die tiefste Mantellinie nicht horizontal liegt und die Mitnehmer im tiefsten Bereich des Laugenbehälters Wasser schöpfen, um es bei der Drehung der Wäschetrommel anzuheben und von einer erhabenen Position durch Öffnungen auf die darunter liegende Wäsche abzuregnen. Die Anordnung ist jedoch so getroffen, daß die geschöpfte Flüssigkeitsmenge bereits abgegeben wird, bevor die Mitnehmer eine wesentlich über der Wäsche liegende Position erreicht haben. Dadurch wird der Benetzungsprozeß stark verzögert, weil die abgegebenen Flüssigkeitsmengen nur an der Innenwandung des Trommelmantels herablaufen und damit die Wäsche unterlaufen. Außerdem befördert die zylinderstumpfförmige Wäschetrommel die innen liegende Wäsche nach hinten (von der Beschikkungsöffnung weg), wo sie von herabregnenden Flüssigkeitsmengen gar nicht erreicht werden könnte. Schließlich ist die Wäsche aus dem hinteren Trommelbereich für die Bedienungsperson auch schwer erreichbar.

Der Erfindung liegt die Aufgabe zugrunde, bei einer eingangs beschriebenen Waschmaschine die Benetzbarkeit und die Erreichbarkeit der Wäsche zu verbessern.

Erfindungsgemäß wird diese Aufgabe dadurch gelöst, daß die Wäschetrommel um eine nach vom ansteigende Drehachse gelagert ist und die Mitnehmer schräg zur Drehrichtung der Wäschetrommel angeordnet sind. Die nach vom ansteigende Drehachse der Trommel erfordert die entsprechende Anpassung des Gehäuses im Bereich der Beschikkungsöffnung dahingehend, daß die Beschickungsöffnungsebene - wie üblich senkrecht zur Drehachse orientiert - ebenso schräg der Bedienungsperson zugeneigt ist. Dadurch verbessert sich die Einsehbarkeit in die Wäschetrommel und die Zugriffsfähigkeit zur innen liegenden Wäsche. Außerdem transportieren die schräg zur Drehrichtung der Wäschetrommel angeordneten Mitnehmer bei geeigneter Drehrichtung, die durch die obligatorische Steuerung der Waschmaschine bestimmt werden kann, die Wäsche nach vorn zur Beschickungsöffnung hin. Die schräg angeordneten Mitnehmer transportieren die geschöpfte Flüssigkeit in derselben Drehrichtung ebenfalls nach vom, so daß die abregnenden Flüssigkeitsmengen wegen der ansteigenden Drehachse auch auf Wäscheteile fallen, die weiter hinten in der Trommel liegen. Sie transportieren die Flüssigkeitsmengen außerdem erheblich höher als einfache, gerade in die Wäschetrommel eingebaute Mitnehmer. Daher können alle angehobenen Flüssigkeitsmengen über der Wäsche abregnen und den Benetzungsvorgang gegenüber dem Stande der Technik stark verkürzen.

Dadurch, daß die Mitnehmer in ihnen enthaltene Flüssigkeitsmengen beim Anheben unter Ausnutzung der Schwerkraft in ihrem Inneren in Richtung quer zur Drehrichtung der Wäschetrommel bewegen, gelangen die geschöpften Flüssigkeitsmengen in Drehrichtung der Wäschetrommel sehr weit nach oben, von wo aus sie alle in der Trommel liegenden Wäscheteile erreichen.

Wenn gemäß einer vorteilhaften Ausbildung der Erfindung die Flüssigkeitseinlässe im Boden der Mitnehmer im am weitesten nach unten reichenden Bereich der Wäschetrommel angeordnet sind, können die meisten Flüssigkeitsmengen aus einem die Wäschetrommel umgebenden Laugenbehälter geschöpft werden.

Für den Betrieb der Waschmaschine kann es besonders vorteilhaft sein, wenn die Flüssigkeitseinlässe nur in einer Drehrichtung der Wäschetrommel im Sinne der Aufnahme von Flüssigkeitsmengen in die Mitnehmer wirksam sind. Dann läßt sich eine besonders kräftige Schöpfwirkung in einer Drehrichtung der Wäschetrommel erzielen und in einer anderen Drehrichtung die Schöpfwirkung bewußt minimieren.

Besonders wirksame Unterscheidungen der Schöpfwirkungen je nach Drehrichtung der Wäschetrommel lassen sich dadurch erzielen, daß gemäß einer vorteilhaften Ausbildung der Erfindung die Flüssigkeitseinlässe von Schaufelblättern gebildet sind, die im Mantel der Wäschetrommel angeordnet und nach außen gestellt sind. Die Ausrichtung der Schaufelblätter je nach Drehrichtung der Wäschetrommel bestimmt ihre Wirkung.

Dabei sind die Öffnungen in den Mitnehmern vorteilhafterweise mindestens überwiegend in demjenigen Bereich ihrer Erstreckung angeordnet, in dem die angehobenen Flüssigkeitsmengen vorzugsweise ins Wäschetrommelinnere abgegeben werden sollen. Das ist bei zylindrischer Wäschetrommel der nahe der Trommellagerung befindliche Abschnitt des Laugenbehälters.

In besonders vorteilhafter Weise sind die Mitnehmer entlang ihrer Erstreckung gebogen. Dadurch kann die Beregnungsfunktion besonders wirksam zustande kommen, indem bei angehobener Mitnehmerposition die geschöpfte Flüssigkeitsmenge in Richtung auf die Beschickungsöffnung der Waschmaschine gefördert wird. Bei der vorausgesetzten Schrägstellung der Drehachse der Wäschetrommel bedeutet dies, daß die abgeregneten Flüssigkeitsmengen teilweise ins Trommelinnere zurückfallen und auf diese Weise auch die hinten in der Wäschetrommel liegenden Wäschestücke gut erreicht. Außerdem benetzen Teile der abgeregneten Flüssigkeitsmengen auch das Fensterglas der Bullaugentür, womit dem Kunden trotz der heutzutage wenigen benötigten Wassermengen deutlich gemacht werden kann, daß seine Waschmaschine tatsächlich Wasser gebraucht.

In für den Herstellungsprozeß besonders vorteilhafter Weise ist die Wäschetrommel gemäß einer Ausbildungsform der Erfindung zylindrisch. Zylindrische Trommeln lassen sich sehr viel einfacher und billiger herstellen als für die vorliegende Erfindung auch verwendbare konische Wäschetrommeln. Wenn auch konische Wäschetrommeln im Sinne der vorliegenden Aufgabenstellung möglicherweise wirkungsvoller und für die Handhabung durch den Kunden eventuell auch vorteilhafter sein können, so ist der zylindrischen Wäschetrommel wegen ihrer bedeutend einfacheren Herstellbarkeit der Vorzug zu geben.

Besonders gut läßt sich die geschöpfte Flüssigkeit in einem schräg eingebauten Mitnehmer von hinten nach vorn transportieren, wenn die Mitnehmer ausgehend vom Bereich des Flüssigkeitseinlasses eine entlang ihrer Erstreckung ansteigende Firstlinie aufweisen. Darin kann es noch von Vorteil sein, wenn die Firstlinie in einem Winkel gleich oder größer ansteigt als der Winkel der von der Horizontalen abweichenden, tiefsten Mantellinie der Wäschetrommel. Dann gelangt die geschöpfte Flüssigkeit beim Anheben der Mitnehmer nämlich besonders weit nach vom.

Bei Versuchen hat es sich für die Form der Mitnehmer als besonders vorteilhaft herausgestellt, daß die Mitnehmer ein einem Dreieck wenigstens ähnliches Profil aufweisen, dessen eine Flanke eine ausgewölbte Kontur hat. Dadurch kann nämlich die andere Flanke mit der nicht ausgewölbten Kontur in der Drehrichtung der Wäschetrommel, die nicht der Vorzugsdrehrichtung zum Schöpfen von Flüssigkeitsmengen entspricht, in ihrem Raumwinkel zwischen Flanke und Trommelmantel an der Trommelinnenseite befindliche Flüssigkeitsmengen ebenfalls aufwärts transportieren, die sich dann über die Wäsche ergießen. Außerdem kann diese Mitnehmerform für eine differenzierte mechanische Wäschebehandlung in der Weise vorteilhaft sein, daß in der einen Drehrichtung, in der die ausgewölbte Kontur der Mitnehmer in Drehrichtung weist, empfindlichere Wäsche nicht so weit angehoben wird und von so weit oben in den unteren Trommelbereich zurückfallen muß wie in der anderen Drehrichtung für weniger empfindliche Wäsche, in der die steilere und ebene Flankenkontur vorausläuft.

Für die Fähigkeit, am tiefsten Punkt des Laugenbehälters möglichst viel Flüssigkeit aufnehmen zu können, ist es von besonderem Vorteil, die Mitnehmer an dieser Stelle besonders großvolumig auszubilden. Gemäß einer vorteilhaften Ausführungsform der erfindungsgemäßen Waschmaschine ist daher der Boden der Mitnehmer im Bereich des Flüssigkeitseinlasses breiter als am entgegengesetzten Ende. Zwar ist die Firsthöhe des Mitnehmers an dieser Stelle womöglich geringer als am entgegengesetzten Ende; doch ist wegen des geringen Flüssigkeitsniveaus auch am tiefsten Punkt des Laugenbehälters die Firsthöhe nicht entscheidend sondern die Basisbreite des Mitnehmers.

Zum möglichst verlustfreien Transport der geschöpften Flüssigkeitsmengen innerhalb des Mitnehmers bis an das dem höheren Niveau der Drehachse gewandte Ende ist es von besonderem Vorteil, wenn die Mitnehmer nur im dem höheren Niveau der Drehachse zugewandten Bereich derjenigen Flanke Öffnungen zum Abgeben geschöpfter Flüssigkeitsmengen aufweisen, die in der dem Schöpfen zugeordneten Vorzugsrichtung liegen.

Anhand eines in der Zeichnung dargestellten Ausführungsbeispiels ist die Erfindung nachstehend näher erläutert. Es zeigen
- Fig. 1: das schwingende Aggregat einer erfindungsgemäßen Waschmaschine bestehend aus Laugenbehälter und Wäschetrommel mit Mitnehmern in seitlicher Durchsicht,
- Fig. 2: einen Blick in Richtung auf den rückwärtigen Boden einer erfindungsgemäß gestalteten Wäschetrommel mit Mitnehmern.
- Fig. 3: einen Querschnitt durch eine Wäschetrommel entlang einer Schnittlinie III-III in Fig. 2,
- Fig. 4: einen Schnitt durch einen Mitnehmer entlang der Schnittlinie IV-IV in Fig. 3 und
- Fig. 5: einen Schnitt durch einen Mitnehmer entlang der Schnittlinie V-V in Fig. 3.

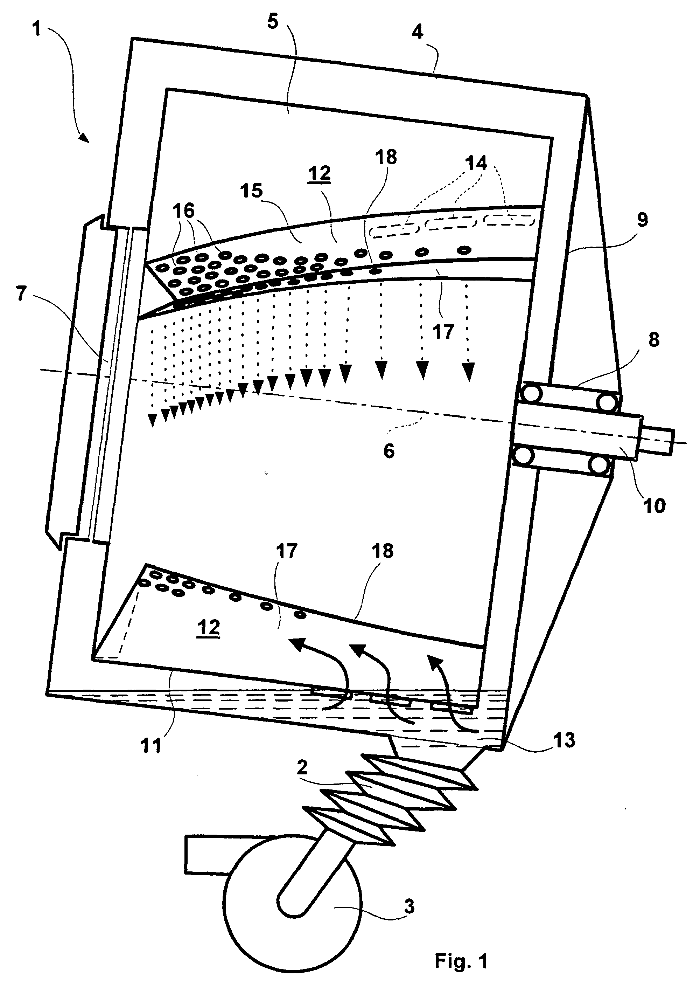

Von der in Fig.1 dargestellten Waschmaschine sind nur das schwingende Aggregat 1 und der unten angeschlossene Faltenschlauch 2 mit Laugenpumpe 3 schematisch dargestellt.

Das in nicht dargestellter Weise schwingend aufgehängte Aggregat 1 besteht im wesentlichen aus dem Laugenbehälter 4 und der darin mindestens annähernd konzentrisch gelagerten Wäschetrommel 5. Das schwingende Aggregat 1 ist in einem nicht dargestellten Gehäuse der Waschmaschine derart schräg aufgehängt bzw. aufgestellt, daß die Drehachse 6 der Wäschetrommel 5 zur frontseitigen Beschickungsöffnung 7 des Laugenbehälters 4 hin in einem Winkel von beispielsweise ≥15° ansteigt. Dadurch ist die Beschikkungsöffnung bedienungsfreundlich zum Benutzer hin geschwenkt.

Die Wäschetrommel ist in einer Nabe 8 am rückwärtigen Boden 9 des Laugenbehälters 4 mit einem stabilen Zapfen 10 in üblicher Weise gelagert. Sie ist zylindrisch; daher steigt die untere Mantellinie11 der Wäschetrommel 5 um denselben Winkel wie ihre Drehachse 6 nach vom an. Am Innenmantel des Trommelzylinders sind drei Mitnehmer 12 gleichmäßig verteilt befestigt. Sie dienen einerseits in üblicher Weise dem Anheben von Wäsche während der Drehung der Wäschetrommel 5, die dadurch mechanisch bearbeitet wird, daß sie nach dem Anheben aus mehr oder weniger großer Höhe wieder in den Trommelgrund zurückfällt und dabei Schmutzanteile zusammen mit der sie benetzenden Lauge abgibt.

Diese Mitnehmer 12 dienen aber außerdem auch zum Schöpfen von Flüssigkeit, die während des Waschvorgangs als ein Anteil, nämlich die freie Flotte 13, der gesamten innerhalb des Laugenbehälters sich befindenden Flüssigkeit im hinteren unteren Teil des Laugenbehälters 4 steht. Aus dieser freien Flotte werden von jedem Mitnehmer 12 über Flüssigkeitseinlässe 14 immer dann Anteile entnommen, wenn der betreffende Mitnehmer sich am tiefsten Punkt seiner Kreisbahn befindet. Die Mitnehmer 12 sind entgegen der sonst üblichen, rechtwinkligen Einbaulage schräg zur Drehrichtung der Wäschetrommel 12 eingebaut. Sie sind außerdem noch konvex in Trommeldrehrichtung gebogen. Daher wird die geschöpfte Flüssigkeit im Inneren der Mitnehmer 12 während der Trommeldrehung nach oben gehoben und im selben Maße, wie die Mitnehmerkrümmung bei der Drehung langsam nach vom überkippt, innerhalb des Mitnehmers nach vom transportiert.

Die Mitnehmer 12 haben vor allem an ihren konvex gewölbten Flanken 15 im vorderen Bereich etliche Öffnungen 16 zum Abgeben der geschöpften Flüssigkeitsmengen. In der konkaven Flanke 17 haben die Mitnehmer keine oder nur sehr wenige solcher Öffnungen und diese auch nur vorn und sehr nahe an der Firstkante 18. Damit gelingt es, den größten Anteil der geschöpften Flüssigkeitsmengen über die vom liegenden Wäscheteile zu gießen. Gleichzeitig werden aber wegen der Schrägstellung der Drehachse 6 auch erhebliche Anteile der geschöpften Flüssigkeitsmengen auf die weiter hinten in der Trommel 5 liegenden Wäscheteile gegeben.

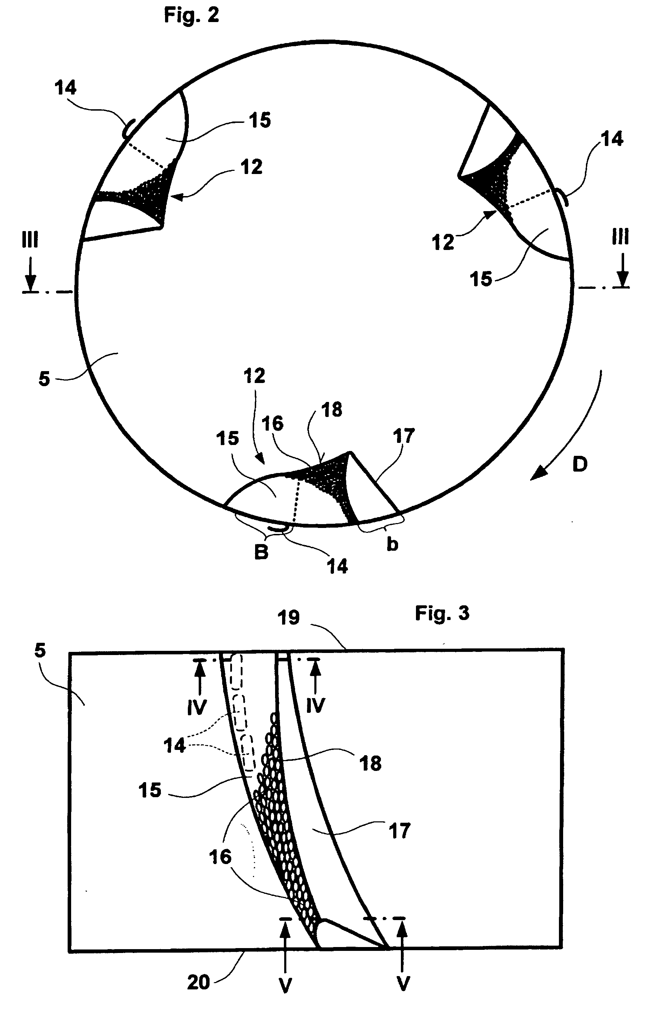

Der in Fig. 2 dargestellte Einblick in die Wäschetrommel 5 zeigt die Anordnung und die Form der Mitnehmer 12 deutlicher. Daraus ist zu erkennen, daß die Firstlinie 18 der Mitnehmer geschwungen ist und am hinteren Ende der Mitnehmer einen geringeren Abstand zum Trommelmantel hat als am vorderen Ende. Außerdem ist zu sehen, daß die Breite B der Mitnehmerbasis am hinteren Ende größer ist als die Breite b am vorderen Ende. Der Querschnitt jedes Mitnehmers 12 ist im wesentlichen dreieckig; die gewölbte Form der konvexen Flanken 15 erzeugt dabei eine gekrümmte Dreiecksseite. Die Öffnungen 16 zum Entleeren der Mitnehmer 12 sind in diesem Beispiel nur auf der konvexen Flanke 15 angebracht.

Aus der Ansicht des Mitnehmers 12 von oben in der Schnittdarstellung der Fig. 3 ist außerdem deutlich sichtbar, daß die undurchbrochene, konkave Flanke 17 in der Nähe der Trommelrückwand 19 steiler ist als in der Nähe der Trommelvorderwand 20 und als die konvexe Flanke 15 in Nähe der Trommelrückwand 19. Entsprechend gegenläufig ist die konvexe Flanke 15 im Vergleich zur konkaven Flanke 17.

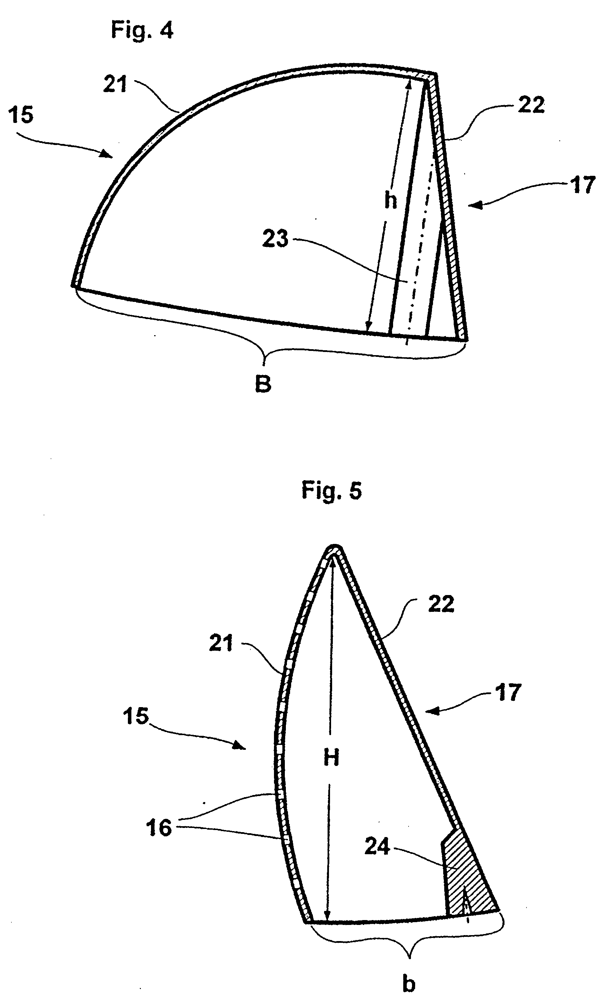

Die beiden Flanken 15 und 17 (Fig. 4 und 5) unterscheiden sich aber wesentlich dadurch, daß die Flanke 15 gekrümmte Meridianlinien 21 hat im Gegensatz zur konkaven Flanke 17, die gerade Meridianlinien 22 hat. Dies ist besonders deutlich in den beiden Schnittdarstellungen der Fig. 4 und 5 zu erkennen. Diese Formung hat insbesondere die Aufgabe, empfindlichere Wäsche nicht so weit anzuheben, wie dies für normale Wäsche (z.B. Baumwolle) möglich und vorteilhaft ist, damit die empfindliche Wäsche von weniger weit oben in den unteren Trommelbereich zurückfällt und dadurch einer geringeren mechanischen Belastung ausgesetzt ist als normale Wäsche. Entsprechend werden dann die jeweiligen Vorzugsdrehrichtungen gesteuert: Empfindliche Wäsche - ausgewölbte Mitnehmerkontur voraus, weniger empfindliche Wäsche - nicht ausgewölbte Mitnehmerkontur voraus. Fig. 4 zeigt den dreieckigen Schnitt durch einen Mitnehmer 12 in Nähe der Trommelrückwand 19 und Fig. 5 in Nähe der Trommelvorderwand 20. Die Mitnehmer 12 sind aus Kunststoff im Spritzverfahren hergestellt und haben in ihrem Inneren eine ausreichende Zahl von Befestigungsdomen 23 und 24, in die selbstschneidende Kunststoffschrauben eingedreht werden können. Damit werden die Mitnehmer 12 am Mantel der Wäschetrommel 5 befestigt.

## Patentansprüche

1. Von vorn beschickbare Waschmaschine mit einer drehbaren Wäschetrommel (5), deren tiefste Mantellinie in Betriebsposition der Waschmaschine von einer Horizontalen nach vorn ansteigend abweicht, mit hohlen, langgestreckten Mitnehmern (12), die an der Innenseite des Mantels angeordnet sind und im rückwärtigen Bereich der Wäschetrommel Flüssigkeitseinlässe (14) aufweisen, die beim Drehen der Wäschetrommel (5) in der tiefsten Position mit Flüssigkeitsmengen (13) beaufschlagt werden und diese Flüssigkeitsmengen in die Mitnehmer (12) leiten, die ihrerseits in ihnen enthaltene Flüssigkeitsmengen anheben und durch Öffnungen (16) aus einer angehobenen Position in das Wäschetrommelinnere abgeben, **dadurch gekennzeichnet, daß** die Wäschetrommel (5) um eine nach vom ansteigende Drehachse (6) gelagert ist und die Mitnehmer (12) schräg zur Drehrichtung (D) der Wäschetrommel (5) angeordnet sind.

2. Waschmaschine nach Anspruch 1, **dadurch gekennzeichnet, daß** die Mitnehmer (12) in ihnen enthaltene Flüssigkeitsmengen beim Anheben unter Ausnutzung der Schwerkraft in ihrem Inneren in Richtung quer zur Drehrichtung (D) der Wäschetrommel (5) bewegen.

3. Waschmaschine nach Anspruch 1 oder 2 mit einem sie umgebenden Laugenbehälter, **dadurch gekennzeichnet, daß** die Flüssigkeitseinlässe (14) im Boden der Mitnehmern (12) im am weitesten nach unten reichenden Bereich der Wäschetrommel (5) angeordnet sind.

4. Waschmaschine nach einem der Ansprüche 1 bis 3, **dadurch gekennzeichnet, daß** die Flüssigkeitseinlässe (14) nur in einer Drehrichtung (D) der Wäschetrommel (5) im Sinne der Aufnahme von Flüssigkeitsmengen (13) in die Mitnehmer (12) wirksam sind.

5. Waschmaschine nach einem der Ansprüche 1 bis 4, **dadurch gekennzeichnet, daß** die Flüssigkeitseinlässe (14) von Schaufelblättern gebildet sind, die im Mantel der Wäschetrommel (5) angeordnet und nach außen gestellt sind.

6. Waschmaschine nach einem der Ansprüche 1 bis 5, **dadurch gekennzeichnet, daß** die Öffnungen (16) in den Mitnehmern (12) mindestens überwiegend in demjenigen Bereich ihrer Erstreckung angeordnet sind, in dem die angehobenen Flüssigkeitsmengen vorzugsweise ins Wäschetrommelinnere abgegeben werden sollen.

7. Waschmaschine nach einem der Ansprüche 1 bis 6, **dadurch gekennzeichnet, daß** die Mitnehmer (12) entlang ihrer Erstreckung gebogen sind.

8. Waschmaschine nach einem der Ansprüche 1 bis 7, **dadurch gekennzeichnet, daß** die Wäschetrommel (5) zylindrisch geformt ist.

9. Waschmaschine nach einem der Ansprüche 1 bis 7, **dadurch gekennzeichnet, daß** die Mitnehmer (12) ausgehend vom Bereich des Flüssigkeitseinlasses (14) eine entlang ihrer Erstreckung ansteigende Firstlinie (18) aufweisen.

10. Waschmaschine nach Anspruch 9, **dadurch gekennzeichnet, daß** die Firstlinie (18) in einem Winkel gleich oder größer ansteigt als der Winkel der von der Horizontalen abweichenden, tiefsten Mantellinie (11) der Wäschetrommel (5).

11. Waschmaschine nach einem der Ansprüche 1 bis 10, **dadurch gekennzeichnet, daß** die Mitnehmer (12) ein einem Dreieck wenigstens ähnliches Profil aufweisen, dessen eine Flanke (15) eine ausgewölbte Kontur hat.

12. Waschmaschine nach einem der Ansprüche 1 bis 11, **dadurch gekennzeichnet**, das der Boden der Mitnehmer (12) im Bereich des Flüssigkeitseinlasses (14) breiter ist (Breite B) als am entgegengesetzten Ende (Breite b).

13. Waschmaschine nach einem der Ansprüche 7 bis 12, **dadurch gekennzeichnet, daß** die Mitnehmer (12) nur im dem höheren Niveau der Drehachse (6) zugewandten Bereich derjenigen Flanke (15) Öffnungen (16) zum Abgeben geschöpfter Flüssigkeitsmengen aufweisen, die in der dem Schöpfen zugeordneten Vorzugsrichtung (D) liegen.

## Claims

1. Front-loading washing machine with a rotatable laundry drum (5), the deepest circumferential surface line of which in operating position of the washing means departs from the horizontal to rise towards the front, with elongate hollow entrainers (12) which are arranged at the inner side of the casing and have in the rearward region of the laundry drum liquid inlets (14) which on rotation of the laundry drum (5) are charged in the deepest position with quantities of liquid and conduct these quantities of liquid in the entrainers (12), which in turn lift up quantities of liquid contained therein and deliver them through openings (16) from a raised position into the laundry drum interior, **characterised in that** the laundry drum is mounted about a rotational axis (6) rising towards the front and the entrainers (12) are arranged obliquely relative to the rotational direction (D) of the laundry drum (5).

2. Washing machine according to claim 1, **characterised in that** the entrainers (12) move quantities of liquid, which are contained therein, during lifting in a direction transverse to the rotational direction (D) of the laundry drum (5) in the interiors of the entrainers with utilisation of gravitational force.

3. Washing machine according to claim 1 or 2 with a washing solution container surrounding it, **characterised in that** the liquid inlets (14) are arranged in the base of the entrainers (12) in the region of the laundry drum (5) extending the furthest downwardly.

4. Washing machine according to one of claims 1 to 3, **characterised in that** the liquid inlets (14) are effective only in one rotational direction (D) of the laundry drum (5) in the sense of take-up of quantities of liquid (13) in the entrainers (12).

5. Washing machine according to one of claims 1 to 4, **characterised in that** the liquid inlets (14) are formed by scoop blades which are arranged in the casing of the laundry drum (5) and set outwardly.

6. Washing machine according to one of claims 1 to 5, **characterised in that** the openings (16) in the entrainers (12) are arranged at least predominantly **in that** region of their length in which the raised quantities of liquid are preferentially to be delivered into the laundry drum interior.

7. Washing machine according to one of claims 1 to 6, **characterised in that** the entrainers (12) are bent along the length thereof.

8. Washing machine according to one of claims 1 to 7, **characterised in that** the laundry drum (5) is formed to be cylindrical.

9. Washing machine according to one of claims 1 to 7, **characterised in that** the entrainers (12) have a ridge line (18) starting from the region of the liquid inlet (14) and rising along the length thereof.

10. Washing machine according to claim 9, **characterised in that** the ridge line (18) rises at an angle which is equal to or larger than the angle of the deepest circumferential surface line (11), which departs from the horizontal, of the laundry drum (5).

11. Washing machine according to one of claims 1 to 10, **characterised in that** the entrainers (12) have a profile which is at least similar to a triangle and one flank (15) of which has an outwardly curved contour.

12. Washing machine according to one of claims 1 to 11, **characterised in that** the base of the entrainers (12) is wider (width B) in the region of the liquid inlet (14) than at the opposite end (width b).

13. Washing machine according to one of claims 7 to 12, **characterised in that** the entrainers (12) have openings (16) for delivery of scooped-up quantities of liquid only in the region, which faces the higher level of the axis (6) of rotation, of those flanks which lie in the preferential direction (D) associated with the scooping.

## Revendications

1. Machine à laver à chargement frontal, munie d'un tambour rotatif (5) dont la génératrice la plus basse en position de service de la machine à laver diverge d'une ligne horizontale en montant vers l'avant, doté d'entraîneurs (12) allongés qui sont placés sur le côté intérieur de l'enveloppe et présentent des entrées de liquide (14) dans la partie arrière du tambour, qui sont alimentées avec des quantités de liquide (13) lors de la rotation du tambour (5) dans la position la plus basse et qui amènent ces quantités de liquide dans les entraîneurs (12), qui, de leur côté, soulèvent les quantités de liquide contenues en eux et les déchargent, par des ouvertures (16), à l'intérieur du tambour, à partir d'une position soulevée, **caractérisée en ce que** le tambour (5) est fixé autour d'un axe rotatif (6) montant vers l'avant et que les entraîneurs (12) sont placés de manière inclinée par rapport au sens de rotation (D) du tambour (5).

2. Machine à laver selon la revendication 1, **caractérisée en ce que** les entraîneurs (12) déplacent les quantités de liquide contenues en eux lors du soulèvement, en utilisant la gravité dans leur intérieur en direction transversale par rapport au sens de rotation (D) du tambour.

3. Machine à laver selon la revendication 1 ou 2, munie d'un réservoir de liquide de lavage l'entourant, **caractérisée en ce que** les entrées de liquide (14) sont placées dans le fond des entraîneurs (12) dans la partie du tambour (5) allant le plus loin vers le bas.

4. Machine à laver selon l'une quelconque des revendications 1 à 3, **caractérisée en ce que** les entrées de liquide (14) sont efficaces uniquement dans un sens de rotation (D) du tambour (5), au sens de la réception de quantités de liquide (13) dans les entraîneurs (12).

5. Machine à laver selon l'une quelconque des revendications 1 à 4, **caractérisée en ce que** les entrées de liquide (14) sont formées par des pales qui sont placées dans l'enveloppe du tambour (5) et sont posées vers l'extérieur.

6. Machine à laver selon l'une quelconque des revendications 1 à 5, **caractérisée en ce que** les ouvertures (16) dans les entraîneurs (12) sont placées au moins principalement dans la partie de leur étendue, dans laquelle les quantités de liquide soulevées doivent être déchargées de préférence à l'intérieur du tambour.

7. Machine à laver selon l'une quelconque des revendications 1 à 6, **caractérisée en ce que** les entraîneurs (12) sont courbés le long de leur étendue.

8. Machine à laver selon l'une quelconque des revendications 1 à 7, **caractérisée en ce que** le tambour (5) est formé de manière cylindrique.

9. Machine à laver selon l'une quelconque des revendications 1 à 7, **caractérisée en ce que** les entraîneurs (12), partant de la partie de l'entrée de liquide (14), présentent une ligne de faîte (18) augmentant le long de leur étendue.

10. Machine à laver selon la revendication 9, **caractérisée en ce que** la ligne de faîte (18) augmente dans un angle égal ou supérieur à l'angle de la génératrice (11) du tambour la plus basse divergeant de la ligne horizontale.

11. Machine à laver selon l'une quelconque des revendications 1 à 10, **caractérisée en ce que** les entraîneurs (12) présentent un profil identique au moins à un triangle, dont l'un des flancs (15) a un contour bombé.

12. Machine à laver selon l'une quelconque des revendications 1 à 11, **caractérisée en ce que** le fond des entraîneurs (12) est plus large (largeur B) dans la partie de l'entrée de liquide (14) que sur l'extrémité opposée (largeur b).

13. Machine à laver selon l'une quelconque des revendications 7 à 12, **caractérisée en ce que** les entraîneurs (12) présentent des ouvertures (16), pour décharger les quantités de liquide puisé, seulement dans la partie du flanc (15) tournée dans le niveau plus haut de l'axe rotatif (6), ces ouvertures étant situées dans le sens de préférence (D) attribué au puisement.
